# FASCICULE DE BREVET EUROPEEN

(11) **EP 1 544 098 B1**
(45) Date de publication et mention de la délivrance du brevet: **02.01.2008**
(21) Numéro de dépôt: 04293001.6
(22) Date de dépôt: 15.12.2004
(51) Int. Cl.: B64C 1/14

(54) **Dispositif de commande à déplacement d'un élément de fermeture pour véhicule**
Antriebsvorrichtung zum Versetzen eines Verschlusselements für Fahrzeuge
Actuation device for the deplacement of a closure element for vehicles

(30) Priorité: 19.12.2003 FR 0315002
(43) Date de publication de la demande: 22.06.2005
(73) Titulaire: ETIENNE LACROIX - TOUS ARTIFICES SA, 31600 Muret (FR); LATECOERE, 31500 Toulouse (FR)
(72) Inventeur: Galvani, Eric, 31450 Pompertuzat (FR); Valembois, Guy, 31700 Blagnac (FR); Baricos, Jean, 31520 Ramonville St Agne (FR); Texcier, Roland, 31850 Montrabe (FR); de Reseguier, Joël, 31400 Toulouse (FR)
(74) Mandataire: Texier, Christian

(56) Documents cités:
- EP-A- 0 741 073
- DE-C- 4 124 377
- US-A- 2 924 404
- US-A- 5 379 971

## Description

La présente invention concerne le domaine des dispositifs de commande à déplacement d'éléments de fermeture pour véhicule.

Elle s'applique en particulier à la commande d'ouverture en urgence de portes pour aéronef.

Mais l'invention n'est pas limitée à cette application particulière.

Elle peut s'appliquer à tout type d'élément de fermeture, notamment tout type de porte ou trappe et tout type de véhicule, notamment aérien, spatial, terrestre ou maritime.

Différents dispositifs de commande à déplacement d'éléments de fermeture, notamment de porte d'avion, ont déjà été proposés.

Le document DE-4124377 décrit un dispositif de commande d'ouverture de porte d'avion comprenant un vérin pyrotechnique dont le cylindre est articulé sur le châssis et la tige est articulée sur un bras lié à la porte.

Le document US-5379971 décrit un dispositif pour l'ouverture d'urgence d'une porte d'avion comprenant une chaîne associée à un moteur linéaire pneumatique. Pour autoriser une ouverture manuelle de la porte sans déplacement du piston du moteur linéaire précité, il est prévu un alésage traversant le piston et une possibilité de libre déplacement à coulissement de la tige par rapport à ce piston.

La présente invention a pour but de perfectionner les moyens existant en proposant un nouveau dispositif qui permet 1) de réduire la masse globale du système, 2) d'améliorer la fiabilité et les performances du système et 3) de réduire et de simplifier les opérations de maintenance et en particulier d'espacer celles-ci.

Les trois objectifs précités sont en effet de première importance aujourd'hui pour les compagnies aériennes.

Ce but est atteint dans le cadre de la présente invention grâce à un dispositif du type défini en revendication 1 annexée.

L'utilisation d'un élément moteur à base d'un vérin pyrotechnique permet la réalisation d'un ensemble sensiblement plus compact et plus léger que les moyens connus de l'art antérieur à base d'actionneurs électriques, pneumatiques ou hydrauliques. Le vérin pyrotechnique est en effet autonome et n'exige pas par exemple

l'équivalent d'une source annexe conséquente de fluide moteur pneumatique ou hydraulique.

Par ailleurs les moyens de liaison mécanique précités spécifiques à l'invention permettent d'éviter la transmission de fortes contraintes à l'élément de fermeture. Ils permettent également une grande souplesse dans la définition de la cinématique et dans la course de l'élément de fermeture.

Ainsi selon un mode de réalisation particulier et non limitatif de l'invention, le vérin pyrotechnique tient lieu d'impulseur actif seulement sur une portion initiale limitée de la course de l'élément de fermeture. Dans ce cas l'encombrement du vérin peut être particulièrement réduit puisque la course de celui-ci peut être nettement inférieure à celle de l'élément de fermeture.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente schématiquement l'architecture générale d'un moyen classique d'articulation d'une porte d'avion sur un fuselage,
- la figure 2 représente une vue schématique de moyens d'entraînement d'une porte d'avion conformes à un mode de réalisation de la présente invention,
- la figure 3 représente une vue latérale partielle des mêmes moyens,
- la figure 4 représente une vue plus détaillée en perspective d'un dispositif conforme à un mode de réalisation de la présente invention,
- la figure 5 représente une vue partielle en perspective éclatée d'un élément moteur de type vérin pyrotechnique conforme à la présente invention,
- la figure 6 représente une première vue en perspective d'un tel élément moteur,
- la figure 7 représente une deuxième vue en perspective de cet élément moteur,
- la figure 8 représente une première vue en coupe longitudinale de l'élément moteur, à l'état de repos verrouillé, selon un plan de coupe référencé VIII-VIII sur la figure 9,
- la figure 9 représente une seconde vue en coupe longitudinale de l'élément moteur en position verrouillée selon un plan de coupe orthogonal à celui de la figure 8 tel qu'illustré IX-IX sur la figure 10,
- la figure 10 représente une vue en coupe transversale de l'élément moteur en position verrouillée selon le plan de coupe référencé X-X sur la figure 8, et
- les figures 11, 12 et 13 représentent schématiquement trois variantes de réalisation d'un élément moteur conforme à la présente invention associé à un élément amortisseur.

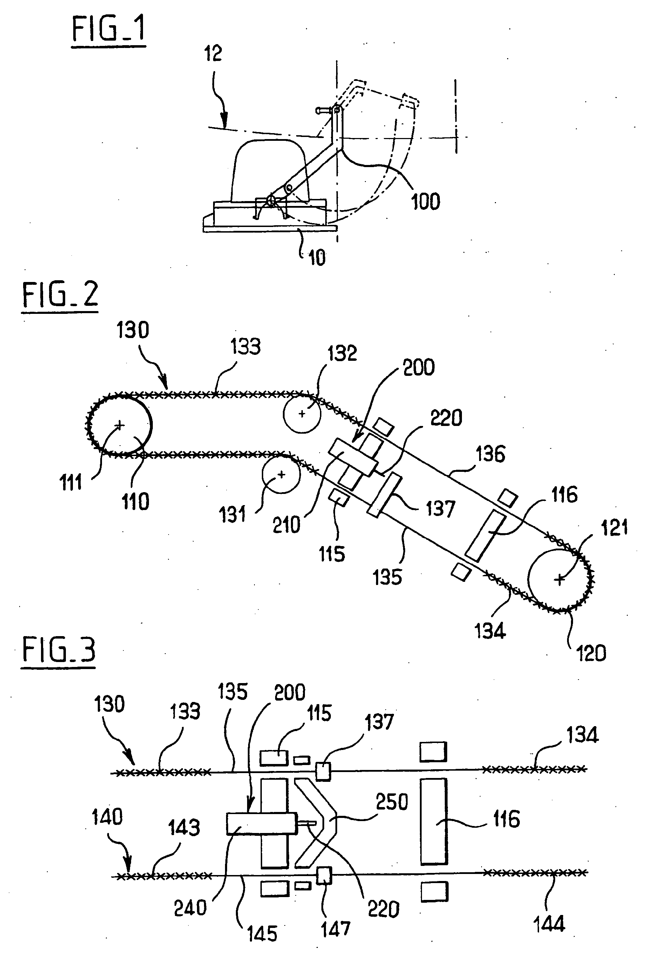

On a représenté sur la figure 1 annexée, l'architecture classique d'articulation d'une porte d'avion 10 sur un fuselage d'avion dont la génératrice extérieure est référencée 12.

Pour l'essentiel, un tel système comprend un bras 100 de géométrie en V ou L articulé par une extrémité sur le châssis ou fuselage et par l'autre extrémité sur la porte 10. La géométrie précise et les dimensions du bras 100 dépendent de divers paramètres dont l'épaisseur du fuselage, le lieu d'articulation et la cinématique recherchée. La structure générale d'un tel bras 100 étant connue de l'homme de l'art, ne sera pas décrite dans le détail par la suite.

Comme on le voit sur les figures annexées, dans le cadre de l'invention, le bras 100 porte de préférence deux arbres parallèles 110, 120, avantageusement sensiblement verticaux.

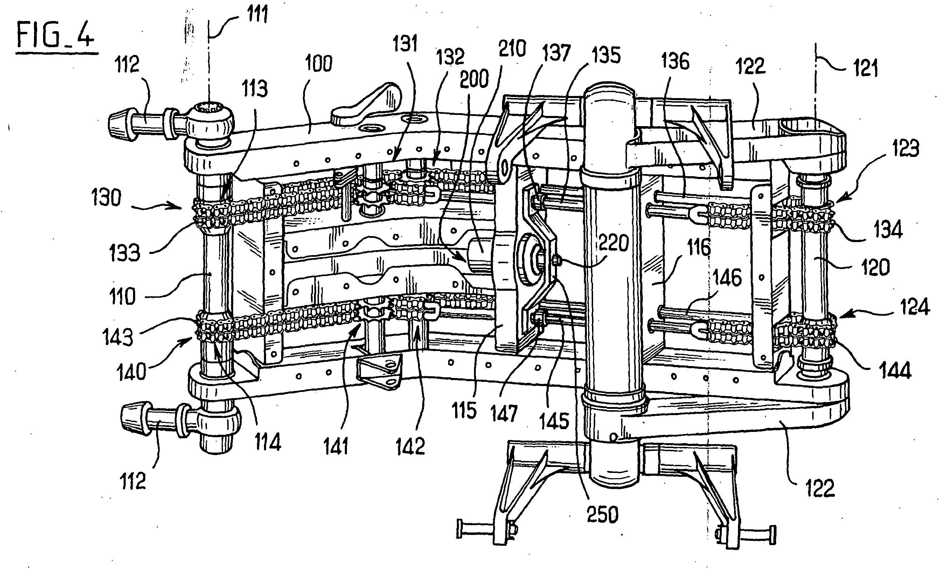

Le premier arbre 110 est lié au fuselage par tous moyens appropriés. Ces moyens sont référencés 112 sur la figure 4. L'arbre 110 est libre de pivotement autour de son axe longitudinal 111 par rapport au bras 100.

Le second arbre 120 est lié à la porte 10 par tout moyen approprié, par exemple par un jeu de biellettes 122. L'arbre 120 est lui-même libre de pivotement autour de son axe longitudinal 121 par rapport au bras 100.

Le dispositif comprend par ailleurs des moyens assurant une liaison à rotation entre les deux arbres 110, 120. Dans le cadre de l'invention, ces moyens de liaison à rotation comprennent de préférence au moins une chaîne.

Plus précisément encore, de préférence, le dispositif comprend deux ensembles de chaînes chacun en forme de boucle, respectivement supérieur et inférieur et référencés 130 et 140 sur la figure 4.

Chacun des deux ensembles de chaînes 130, 140 est en prise avec deux pignons 113, 114 et 123, 124 liés respectivement à l'un des deux arbres 110, 120 précités. Le bras 100 porte par ailleurs deux paires de pignons de renvoi 131, 132 et 141, 142 disposés pour guider chaque ensemble de chaînes 130, 140 sur un circuit épousant globalement la géométrie en V ou L du bras 100.

L'homme de l'art comprendra que l'arbre 110 étant fixe par rapport au fuselage, le déplacement à pivotement du bras 100 par rapport au fuselage entraîne une translation des ensembles de chaînes 130, 140 grâce à la coopération définie entre ceux-ci et les pignons 113, 114 et de là une rotation de l'arbre 120 par rapport au bras 100 grâce à la coopération définie entre les ensembles de chaînes 130, 140 et les pignons 123, 124, propre à maintenir la porte 10 liée à l'arbre 120 parallèle à sa position de repos.

Plus précisément encore, selon le mode de réalisation préférentiel représenté sur les figures annexées, chaque ensemble de chaînes 130, 140 comprend deux tronçons de maillons 133, 134 et 143, 144 reliés entre eux respectivement par deux tiges parallèles 135, 136 et 145, 146.

Les deux paires de tiges 135, 136, 145, 146 sont guidées libre de coulissement par des entretoises verticales 115, 116 portées par le bras 100.

Le dispositif conforme à la présente invention comprend en outre un élément moteur 200 formé d'un vérin pyrotechnique. L'élément moteur 200 est porté par le bras 100. L'élément moteur 200 comprend essentiellement un corps 210 et une tige ou piston susceptible d'être déplacé par rapport au corps 210. De préférence, le corps 210 est lié au bras 100, par exemple à l'entretoise 115. La tige ou piston 220 quant à elle porte un organe de sollicitation ou poussoir en forme d'arbalète référencé 250. L'organe de sollicitation 250 est placé en regard de butées 137, 147 portées par l'une des tiges 135, 145 de chaque ensemble de chaînes 130, 140.

L'homme de l'art comprendra que lorsque la porte 10 est sollicitée à déplacement par rapport au fuselage par un moyen d'entraînement auxiliaire, par exemple manuellement, les butées 137, 147 sont déplacées en éloignement de l'organe de sollicitation (vers la droite selon l'illustration donnée sur la figure 4) de sorte que les tiges 135, 145 coulissent librement par rapport à l'organe de sollicitation 250.

En revanche, lorsque l'élément moteur 210 est activé, la tige 220 est sollicitée vers l'extérieur du corps 210 et déplace l'organe de sollicitation 250 en appui contre les butées 137, 147. Les ensembles de chaînes 130, 140 sont alors sollicités à translation par rapport au bras 100. Cette sollicitation entraîne un pivotement du bras 100 par rapport à l'arbre 110 et le pivotement de l'arbre 120 par rapport au bras 100, donc l'ouverture de la porte liée aux biellettes 122, ceci en maintenant, comme indiqué précédemment, le parallélisme de la porte par rapport à sa position de repos initiale.

La coopération définie entre les chaînes 130, 140 et les pignons 123, 124 forme amplificateur de la course du vérin 200.

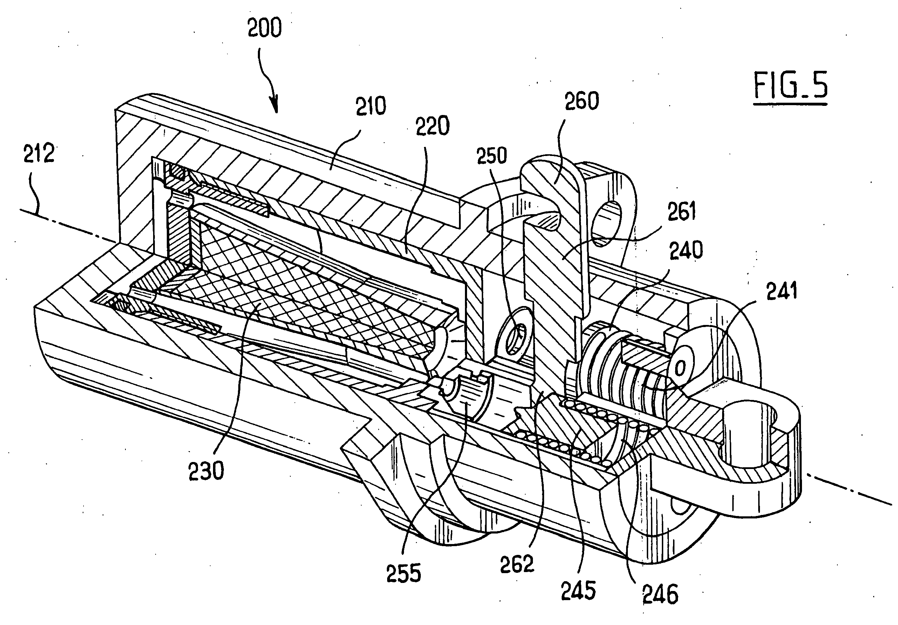

Un mode de réalisation préférentiel mais non limitatif du vérin pyrotechnique est illustré sur les figures 5 à 10 annexées.

On retrouve sur ces figures, le corps 210 et la tige 220.

Le vérin pyrotechnique 200 loge une masse 230 de composition pyrotechnique apte à générer un gaz chaud développé dans une chambre entre le corps 210 et le piston 220 pour provoquer l'expansion du vérin, c'est-à-dire une sortie de la tige 220 par rapport au corps 210.

A titre d'exemple non limitatif, la masse de composition pyrotechnique 230 peut être du propergol.

De préférence dans le cadre de la présente invention, la masse de composition pyrotechnique 230 présente une section variable, plus précisément une section croissante en éloignement de sa face initiée. La variation de section de la masse de composition pyrotechnique 230 est adaptée pour générer une augmentation du volume de gaz développé proportionnelle à l'augmentation résultante de la chambre définie entre le corps 210 et le piston 220 pour opérer un effort constant sur la tige 220 quelle que soit l'expansion de celle-ci.

La masse pyrotechnique 230 peut être initiée par tous moyens appropriés. Il peut s'agir d'un initiateur électrique.

Cependant, de préférence, la masse 230 est initiée par un initiateur ou percuteur mécanique.

Par ailleurs, dans le cadre de la présente invention, il est prévu de préférence deux initiateurs en parallèle, pour effet de redondance et de fiabilité, associés à la masse 230.

Ainsi dans le cadre de la présente invention, le vérin pyrotechnique 200 comprend de préférence deux percuteurs mécaniques 240, 245 associés respectivement à des ressorts de sollicitation 241, 246, bandés au repos. Chaque percuteur 240, 245 est placé en regard d'une amorce 250, 255.

L'initiation des amorces 250 et 255 est transmise de manière connue en soi à la masse pyrotechnique 230.

Dans le cadre de l'invention, le vérin pyrotechnique 200 comprend de préférence un tiroir de verrouillage 260.

Plus précisément, le tiroir 260 assure une double fonction de sécurité. D'une part, le tiroir 260 assure un blocage mécanique, au repos, du piston 220. D'autre part, le tiroir 260 assure au repos un blocage mécanique des percuteurs 240 et 245.

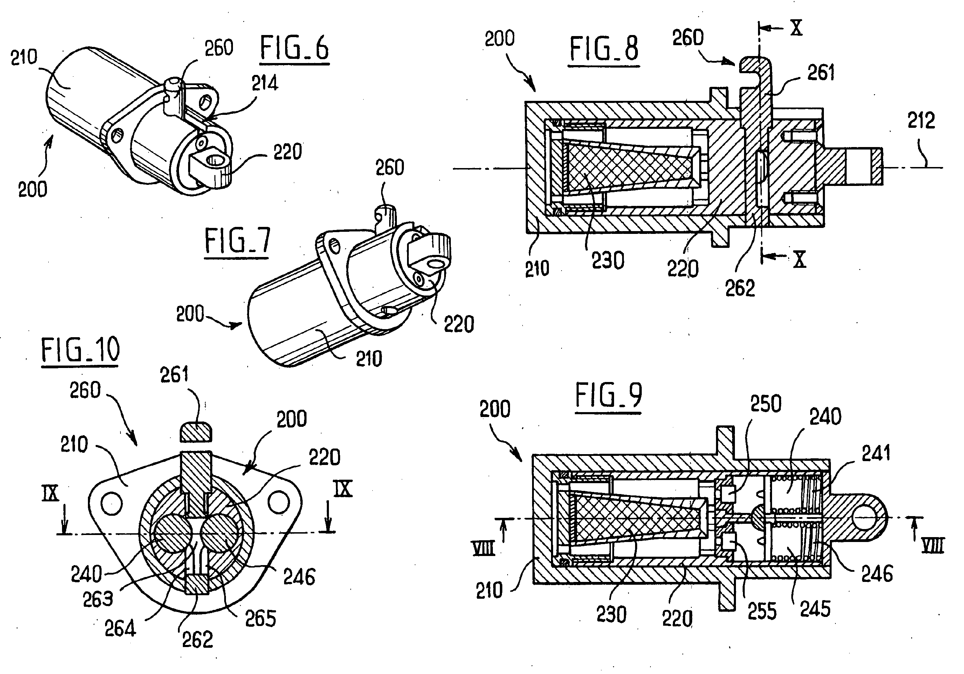

Le tiroir de verrouillage 260 peut faire l'objet de nombreuses variantes de réalisation. De préférence, il est monté à translation dans une direction orthogonale à l'axe longitudinal 212 du corps 210. Le tiroir 260 présente deux tronçons possédant des sections droites différentes : un tronçon externe 261 de forte section droite et un tronçon interne 262 de section droite inférieure. Le corps 210 présente une gorge longitudinale 214 (voir notamment figure 6).

La gorge 214 présente une largeur inférieure à l'encombrement en section droite du tronçon externe 261 du tiroir 260, mais supérieure au même encombrement en section droite du tronçon interne 262.

En position de repos, telle qu'illustrée sur les figures 8 et 10, le tronçon externe 261 du tiroir 260 est placé en regard de la gorge 214. Ainsi, le tiroir 260 lié à la tige 220 ne peut être déplacé dans la gorge 214. Le tiroir 260 assure ainsi un verrouillage mécanique entre la tige 220 et le corps 210.

En revanche, l'homme de l'art comprendra que lorsque le tiroir 260 est sollicité radialement vers l'extérieur du corps 210 et que le tronçon interne 262 est placé en regard de la gorge longitudinale 214, le tiroir peut être translaté dans la gorge 214 et ainsi le tiroir 260 autorise un déplacement relatif entre la tige 220 liée au tiroir 260 et le corps 210.

Par ailleurs, comme on le voit notamment sur la figure 10, le tiroir 260 possède d'une part, une structure 263 servant de butée aux percuteurs 240, 245 en position de repos initial du tiroir 260 tel qu'illustré sur la figure 8. Le tiroir 260 possède d'autre part, des lumières 264, 265 placées en regard des percuteurs 240, 245 après translation radialement vers l'extérieur du tiroir 260 pour autoriser le déplacement des percuteurs 240, 245 contre les amorces 250, 255.

On notera que selon le mode de réalisation particulier représenté sur les figures annexées, la masse de matériau pyrotechnique 230, les amorces 250, 255 et les percuteurs 240, 245 sont portés par la tige 220. En variante, l'ensemble de ces éléments, ou au moins une partie d'entre eux, pourrait être porté par le corps 210.

Selon d'autres variantes de l'invention, l'élément moteur pyrotechnique 200 est associé à un élément amortisseur.

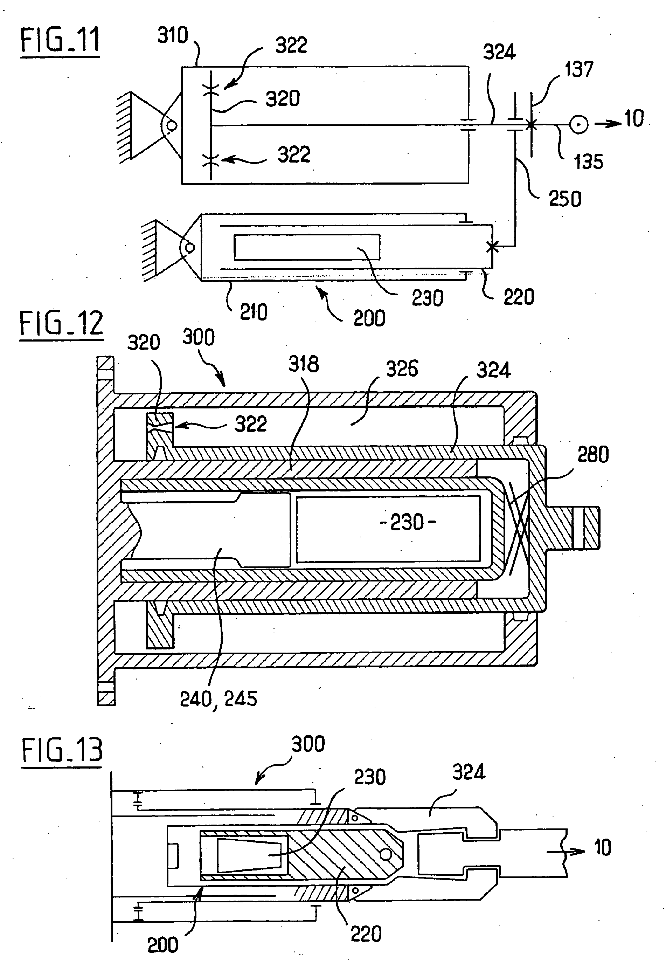

On a schématisé sur la figure 11 annexée, sous la référence 300, un tel élément amortisseur disposé en parallèle du vérin pyrotechnique 200. Un tel élément amortisseur 300 peut faire l'objet de nombreuses variantes de réalisation. Selon le mode de réalisation schématisé sur la figure 11, il peut s'agir d'un vérin possédant un corps 310 et un piston 320 possédant des alésages calibrés 322 pour permettre un déplacement contrôlé de fluide de part et d'autre du piston 320, lorsque la tige 324 liée au piston 320 est sollicitée à déplacement par rapport au corps 310.

On a représenté sur la figure 12 annexée, une variante de réalisation selon laquelle le vérin pyrotechnique 200 est intégré dans la tige 324 d'un tel élément amortisseur.

Plus précisément, selon cette variante, la tige 324 a la forme d'une cloche et coopère avec une jupe 318 centrée sur le corps 310 pour définir une chambre annulaire externe 326 dans laquelle se déplace le piston 320 muni des alésages calibrés 322.

La jupe 318 sert de corps externe au vérin pyrotechnique.

Le piston du vérin pyrotechnique est également placé dans la jupe 318. Il loge le système d'initiation 240, 245 et la masse de matériau pyrotechnique 230.

De préférence, un moyen élastique amortisseur 280 est intercalé entre le piston pyrotechnique 220 et le piston ou tige 324 de l'amortisseur.

On a illustré sur la figure 13, une variante de réalisation qui se distingue de la figure 12 par le fait que l'élément formant tige ou piston 324 de l'amortisseur présente une ligne de faiblesse adaptée pour être rompue lors de la mise en oeuvre du vérin pyrotechnique 200 afin d'assurer un débrayage de l'élément amortisseur lors de la mise en oeuvre du vérin pyrotechnique. On comprend que dans ce cas, l'effort est exercé directement par le piston ou tige de sortie 220 du vérin pyrotechnique.

La commande du vérin pyrotechnique 200 peut être assurée par tous moyens appropriés. Il peut s'agir de moyens mécaniques ou électriques placés sur la porte ainsi équipée à disposition du personnel ou encore dans le cockpit de commande de l'avion.

Le fonctionnement du dispositif précédemment décrit est essentiellement le suivant.

Lors d'une ouverture normale de la porte, celle-ci est sollicitée manuellement, après le déverrouillage traditionnel. Grâce au coulissement relatif autorisé entre les tiges 135, 145 et l'organe de sollicitation 250, l'élément moteur 200 est sans effet dans ce contexte.

Au contraire, dès que l'élément moteur 200 est sollicité, par exemple lorsqu'une situation d'urgence nécessitant une ouverture rapide est détectée, après retrait de l'élément de verrouillage 260, la tige 220 actionne l'organe de sollicitation 250 et provoque, par l'intermédiaire des ensembles de chaînes 130, 140 le déplacement à pivotement du bras 100 et de la porte.

L'ensemble de la commande requise pour l'extraction de l'élément de verrouillage 260 peut être formé de tous moyens appropriés, par exemple d'une poignée disposée sur la porte et associée à une tringlerie de liaison adéquate.

Dans le cas où, comme indiqué précédemment, l'élément moteur 200 forme un simple impulseur, l'élément de fermeture ou porte 10 continue sa course par inertie lorsque les butées 137, 147 échappent au poussoir 250.

On notera que la présente invention offre l'avantage de permettre aisément une commande localisée sur la porte ou à distance de celle-ci. Par ailleurs, l'utilisation d'un élément moteur de type vérin pyrotechnique offre l'avantage d'une bonne qualité de stockage dans le temps. Il permet la réalisation d'un système totalement étanche. En effet un vérin pyrotechnique ne nécessite aucun évent, y compris pour un retour à la position d'origine, puisque le vérin pyrotechnique autorise une rétraction facile de la tige 220 dès que les gaz développés ont refroidi.

La présente invention permet de tenir une large gamme de température. Elle permet d'offrir un dispositif léger et parfaitement insensible à la fois aux variations d'orientation dans l'espace, aux parasites électriques ou électromagnétiques, voire à tout autre type d'agression, et aux vibrations mécaniques.

En particulier, dans le cadre de l'invention, on peut remplacer le système à chaîne précité, par tout autre moyen apte à maintenir le parallélisme de la porte par rapport à sa position d'origine, par exemple à base d'un ou plusieurs parallélogramme(s) déformable(s), lorsque cela est requis, ou par tout autre moyen de liaison/articulation assurant la cinématique recherchée, par exemple un simple pivotement ou translation dans le cas d'une trappe.

L'implantation du vérin pyrotechnique 200 n'est pas limitée à la disposition précitée. Le vérin 200 peut en effet être disposé en dehors du bras. Par ailleurs la coopération entre le vérin 200 et la porte 10 peut être obtenue avec un interface autre qu'une chaîne.

## Revendications

1. Dispositif de commande pour le déplacement d'un élément de fermeture monté sur le châssis d'un véhicule, et comprenant, pouvant être intercalé entre le châssis du véhicule et l'élément de fermeture, un élément moteur (20Q) actif sur commande, constitué d'un vérin pyrotechnique, **caractérisé en ce qu'**il comprend en outre des moyens de liaison mécanique (250) adaptés pour autoriser une liaison motrice entre le vérin pyrotechnique (200) et l'élément de fermeture (10) lors d'une activation du vérin pyrotechnique (200), tout en autorisant un libre déplacement de l'élément de fermeture (10) par rapport au vérin pyrotechnique (200), lorsque l'élément de fermeture (10) est déplacé sur une course supérieure à celle permettant ladite liaison motrice.

2. Dispositif selon la revendication 1, **caractérisé par le fait que** le vérin pyrotechnique (200) comprend une masse de composition pyrotechnique (230) présentant une section variable propre à générer un effort constant.

3. Dispositif selon l'une des revendications 1 ou 2, **caractérisé par le fait qu'**il comprend un tiroir de sécurité mécanique (260) qui interdit dans sa position de repos, la mise en oeuvre du vérin pyrotechnique (200).

4. Dispositif selon la revendication 3, **caractérisé par le fait que** tiroir de sécurité (260) assure une double fonction de verrouillage : d'une part, un verrouillage du piston mécanique (220) de vérin pyrotechnique, et d'autre part, un blocage mécanique de percuteurs (240, 245).

5. Dispositif selon l'une des revendications 3 ou 4, **caractérisé par le fait que** le tiroir de sécurité (260) présente au moins deux tronçons, dont un tronçon externe (261) placé en position de repos en regard d'une gorge (214) formée dans le corps (210) de l'élément moteur (200) et présentant une largeur inférieure à l'encombrement en section droite dudit tronçon externe (261).

6. Dispositif selon l'une des revendications 1 à 5, **caractérisé par le fait que** le vérin pyrotechnique (200) forme impulseur.

7. Dispositif selon l'une des revendications 1 à 6, **caractérisé par le fait que** l'élément moteur (200) possède un poussoir (250) et le dispositif comprend en outre une butée (137, 147) associée à l'élément de fermeture (10) et placée en regard du poussoir (250) de telle sorte que l'élément de fermeture (10) est entraîné lorsque le poussoir (250) sollicite la butée (137, 147), tout en autorisant un libre déplacement de la butée (137) en éloignement du poussoir (250).

8. Dispositif selon l'une des revendications 1 à 7, **caractérisé par le fait qu'**il comporte un amplificateur de déplacement entre le vérin pyrotechnique (200) et l'élément de fermeture (10).

9. Dispositif selon la revendication 8, **caractérisé par le fait que** l'amplificateur de déplacement est formé d'une chaine (130, 140) associée à un pignon.

10. Dispositif selon l'une des revendications 1 à 9, **caractérisé par le fait qu'**il comprend en outre un bras (100) sur lequel est placé l'élément moteur (200) et articulé sur le châssis de véhicule et portant à pivotement l'élément de fermeture (10).

11. Dispositif selon la revendication 10, **caractérise en ce que** le bras (100) a une géométrie en V ou L et le dispositif comprend deux arbres (110, 120) montés sur le bras, l'un (110) lié à un châssis de véhicule et libre de pivotement par rapport au bras (100), l'autre (120) lié à l'élément de fermeture (10) et libre de pivotement par rapport au bras (100).

12. Dispositif selon la revendication 11, **caractérisé par le fait qu'**il comprend des moyens (130, 140) de liaison à rotation entre les deux arbres (110, 120).

13. Dispositif selon la revendication 12, **caractérisé par le fait que** les moyens de liaison à rotation comprennent au moins une chaîne (130,1 40).

14. Dispositif selon la revendication 13, **caractérisé par le fait qu'**il comprend deux ensembles de chaînes en boucle parallèles (130, 140).

15. Dispositif selon l'une des revendications 13 ou 14, **caractérisé par le fait que** chaque ensemble de chaînes (130, 140) comprend deux tronçons de chaînes reliés par deux tiges guidées à translation.

16. Dispositif selon l'une des revendications 1 à 15, **caractérisé par le fait que** l'élément moteur (200) est intercalé entre un bras articulé (100) et une chaîne (130, 140).

17. Dispositif selon l'une des revendications 1 à 16, **caractérisé par le fait qu'**il comprend des moyens propres à maintenir un parallélisme de l'élément de fermeture (10) par rapport à sa position d'origine à base de parallélogrammes déformables.

18. Dispositif selon l'une des revendications 1 à 17, **caractérisé par le fait qu'**il est conçu pour le déplacement d'un élément de fermeture (10) constitué d'une porte d'avion.

19. Dispositif selon l'une des revendications 1 à 18, **caractérisé par le fait qu'**il comprend en outre un élément amortisseur (300).

20. Dispositif selon la revendication 19, **caractérisé par le fait que** l'élément amortisseur (300) est disposé en parallèle de l'élément moteur (200).

21. Dispositif selon l'une des revendications 19 ou 20, **caractérisé en ce que** l'élément amortisseur (300) est intégré dans l'élément moteur (200).

22. Dispositif selon la revendication 21, **caractérisé en ce que** l'élément moteur (200) est disposé dans la tige (324) d'un vérin amortisseur.

23. Dispositif selon l'une des revendications 19 à 22, **caractérisé en ce qu'**il est prévu des moyens aptes à débrayer l'élément amortisseur lors de la mise en oeuvre de l'élément moteur (100).

24. Dispositif selon la revendication 23, **caractérisé en ce que** la tige du vérin amortisseur (300) présente une ligne de faiblesse sécable lors de la mise en oeuvre de l'élément moteur (100).

## Claims

1. A device for controlling the movement of a closure element mounted on the structure of a vehicle, and comprising, suitable for being interposed between the structure of the vehicle and the closure element, a driver element (200) that can be activated on command and that is constituted by a pyrotechnic actuator, the device being **characterized in that** it further comprises mechanical connection means (250) suitable for allowing a driving connection between the pyrotechnic actuator (200) and the closure element (10) when the pyrotechnic actuator (200) is activated, while also allowing the closure element (10) to move freely relative to the pyrotechnic actuator (200) when the closure element (10) is moved over a stroke greater than that enabling said driving connection.

2. A device according to claim 1, **characterized by** the fact that the pyrotechnic actuator (200) contains a mass (230) of pyrotechnic composition possessing a section that varies and that is suitable for generating a force that is constant.

3. A device according to claim 1 or claim 2, **characterized by** the fact that it includes a mechanical safety slide (260) which, in its rest position, prevents the pyrotechnic actuator (200) from being operated.

4. A device according to claim 3, **characterized by** the fact that the safety slide (260) performs two locking functions: firstly locking the mechanical piston (220) of the pyrotechnic actuator, and secondly mechanically blocking strikers (240,245).

5. A device according to claim 3 or claim 4, **characterized by** the fact that the safety slide (260) presents at least two segments, including an external segment (261) placed at rest facing a groove (214) formed in the body (210) of the driver element (200) and presenting a width that is smaller than the size in right section of said external segment (261).

6. A device according to any one of claims 1 to 5, **characterized by** the fact that the pyrotechnic actuator (200) forms an impulse thruster.

7. A device according to any one of claims 1 to 6, **characterized by** the fact that the driver element (200) possesses a pusher (250) and the device further comprises an abutment (137, 147) associated with the closure element (10) and placed facing the pusher (250) so that the closure element (10) is driven when the pusher (250) presses against the abutment (137, 147), while allowing the abutment (137) to move freely away from the pusher (250).

8. A device according to any one of claims 1 to 7, **characterized by** the fact that it includes a displacement amplifier between the pyrotechnic actuator (200) and the closure element (10).

9. A device according to claim 8, **characterized by** the fact that the displacement amplifier is constituted by a chain (130, 140) associated with a gearwheel.

10. A device according to any one of claims 1 to 9, **characterized by** the fact that it further comprises an arm (100) on which the driver element (200) is placed and that is hinged to the vehicle structure and that pivotally carries the closure element (10).

11. A device according to claim 10, **characterized by** the fact that the arm (100) is V-shaped or L-shaped and the device comprises two shafts (110, 120) mounted on the arm, one of the shafts (110) being connected to the structure of the vehicle, and being free to pivot relative to the arm (100), and the other shaft (120) being connected to the closure element (10) and being free to pivot relative to the arm (100).

12. A device according to claim 11, **characterized by** the fact that it includes rotary connection means (130, 140) between the two shafts (110, 120).

13. A device according to claim 12, **characterized by** the fact that the rotary connection means comprise at least one chain (130, 140).

14. A device according to claim 13, **characterized by** the fact that it has two sets of chains constituting parallel loops (130, 140).

15. A device according to claim 13 or claim 14, **characterized by** the fact that each set of chains (130, 140) comprises two chain segments interconnected by two rods that are guided to move in translation.

16. A device according to any one of claims 1 to 15, **characterized by** the fact that the driver element (200) is interposed between a hinged arm (100) and a chain (130, 140).

17. A device according to any one of claims 1 to 16, **characterized by** the fact that it includes means suitable for maintaining the closure element (10) parallel relative to its original position, said means being placed on deformable parallelograms.

18. A device according to any one of claims 1 to 17, **characterized by** the fact that it is designed to move a closure element (10) constituted by an airplane door.

19. A device according to any one of claims 1 to 18, **characterized by** the fact that it further includes a damper element (300).

20. A device according to claim 19, **characterized by** the fact that the damper element (300) is disposed in parallel with the driver element (200).

21. A device according to claim 19 or claim 20, **characterized in that** the damper element (300) is integrated in the driver element (200).

22. A device according to claim 21, **characterized in that** the driver element (200) is disposed in the rod (324) of a damper piston and cylinder arrangement.

23. A device according to any one of claims 19 to 22, **characterized in that** means are provided suitable for declutching the damper element in the event of the driver element (200) being operated.

24. A. device according to claim 23, **characterized in that** the rod of the damper piston and cylinder arrangement (300) presents a line of weakness that is breakable in the event of the driver element (200) being operated.

## Patentansprüche

1. Betätigungsvorrichtung für die Bewegung eines Verschlußelements, das auf dem Chassis eines Fahrzeugs montiert ist, wobei sie ein auf Befehl aktiviertes Motorelement (200) umfaßt, das zwischen dem Chassis des Fahrzeugs und dem Verschlußelement eingefügt werden kann und das aus einem pyrotechnischen Zylinder gebildet ist, **dadurch gekennzeichnet, daß** sie außerdem mechanische Verbindungsmittel (250) umfaßt, die dafür eingerichtet sind, bei einer Auslösung des pyrotechnischen Zylinders (200) eine angetriebene Verbindung zwischen dem pyrotechnischen Zylinder (200) und dem Verschlußelement (10) bereitzustellen und dabei gleichzeitig eine freie Bewegung des Verschlußelements (10) relativ zum pyrotechnischen Zylinder (200) zu gestatten, wenn das Verschlußelement (10) auf einer Bahn bewegt wird, die über diejenige hinausgeht, die von der angetriebenen Verbindung ermöglicht wird.

2. Vorrichtung nach Anspruch 1, **dadurch gekennzeichnet, daß** der pyrotechnische Zylinder (200) eine Masse einer pyrotechnischen Mischung (230) umfaßt, die einen veränderlichen Querschnitt hat, der dafür eingerichtet ist, eine konstante Kraft zu erzeugen.

3. Vorrichtung nach einem der Ansprüche 1 oder 2, **dadurch gekennzeichnet, daß** sie einen mechanischen Sicherheitsschieber (260) umfaßt, der in seiner Ruheposition die Auslösung des pyrotechnischen Zylinders (200) verhindert.

4. Vorrichtung nach Anspruch 3, **dadurch gekennzeichnet, daß** der Sicherheitsschieber (260) eine doppelte Verriegelungsfunktion bereitstellt: zum einen eine Verriegelung des mechanischen Kolbens (220) des pyrotechnischen Zylinders und zum anderen eine mechanische Blockierung der Schlagbolzen (240, 245).

5. Vorrichtung nach einem der Ansprüche 3 oder 4, **dadurch gekennzeichnet, daß** der Sicherheitsschieber (260) wenigstens zwei Abschnitte hat, von denen ein äußerer Abschnitt (261) in der Ruheposition gegenüber einer Rille (214) steht, die im Gehäuse (210) des Motorelements (200) ausgebildet ist und deren Breite kleiner ist als die Querschnittsabmessung des äußeren Abschnitts (261).

6. Vorrichtung nach einem der Ansprüche 1 bis 5, **dadurch gekennzeichnet, daß** der pyrotechnische Zylinder (200) einen Impulsantrieb bildet.

7. Vorrichtung nach einem der Ansprüche 1 bis 6, **dadurch gekennzeichnet, daß** das Motorelement (200) einen Drücker (250) hat und daß die Vorrichtung außerdem einen Anschlag (137, 147) umfaßt, der mit dem Verschlußelement assoziiert ist und der dem Drücker (250) gegenüberliegend derart angeordnet ist, daß das Verschlußelement (10) bewegt wird, wenn der Drücker (250) auf den Anschlag (137, 147) drückt, wobei gleichzeitig die freie Bewegung des Anschlags (137) möglich ist, wenn dieser sich vom Drücker (250) entfernt.

8. Vorrichtung nach einem der Ansprüche 1 bis 7, **dadurch gekennzeichnet, daß** es zwischen dem pyrotechnischen Zylinder (200) und dem Verschlußelement (10) einen Bewegungsverstärker umfaßt.

9. Vorrichtung nach Anspruch 8, **dadurch gekennzeichnet, daß** der Bewegungsverstärker durch eine Kette (130, 140) zusammen mit einem Zahnrad gebildet wird.

10. Vorrichtung nach einem der Ansprüche 1 bis 9, **dadurch gekennzeichnet, daß** sie außerdem einen Arm (100) umfaßt, auf dem das Motorelement (200) angeordnet ist und der am Chassis des Fahrzeugs gelenkig befestigt ist und der schwenkbar gelagert das Verschlußelement (10) trägt.

11. Vorrichtung nach Anspruch 10, **dadurch gekennzeichnet, daß** der Arm (100) V-förmig oder L-förmig ist und daß die Vorrichtung zwei Wellen (110, 120) umfaßt, die am Arm angebracht sind, wobei die eine (110) mit einem Chassis des Fahrzeugs verbunden ist und gegenüber dem Arm (100) frei drehbar ist, und die andere (120) mit dem Verschlußelement (10) verbunden und gegenüber dem Arm (100) frei drehbar ist.

12. Vorrichtung nach Anspruch 11, **dadurch gekennzeichnet, daß** sie Mittel (130, 140) zur drehend beweglichen Verbindung zwischen den beiden Wellen (110, 120) umfaßt.

13. Vorrichtung nach Anspruch 12, **dadurch gekennzeichnet, daß** die Mittel zur drehend beweglichen Verbindung wenigstens eine Kette (130, 140) umfassen.

14. Vorrichtung nach Anspruch 13, **dadurch gekennzeichnet, daß** sie zwei Ketteneinheiten in parallelen Schleifen (130, 140) umfaßt.

15. Vorrichtung nach einem der Ansprüche 13 oder 14, **dadurch gekennzeichnet, daß** jede Ketteneinheit (130, 140) zwei Kettenabschnitte umfaßt, die durch zwei Stangen verbunden sind, die verschiebbar geführt sind.

16. Vorrichtung nach einem der Ansprüche 1 bis 15, **dadurch gekennzeichnet, daß** das Motorelement (200) zwischen einem schwenkbaren Arm (100) und einer Kette (130, 140) eingefügt ist.

17. Vorrichtung nach einem der Ansprüche 1 bis 16, **dadurch gekennzeichnet, daß** sie Mittel umfaßt, die dafür geeignet sind, auf der Basis verformbarer Parallelogramme, eine Parallelität des Verschlußelements (10) relativ zu seiner Anfangsposition beizubehalten.

18. Vorrichtung nach einem der Ansprüche 1 bis 17, **dadurch gekennzeichnet, daß** sie für die Bewegung eines Verschlußelements (10) konzipiert ist, das durch eine Flugzeugtüre gebildet wird.

19. Vorrichtung nach einem der Ansprüche 1 bis 18, **dadurch gekennzeichnet, daß** sie außerdem ein Dämpfungselement (300) umfaßt.

20. Vorrichtung nach Anspruch 19, **dadurch gekennzeichnet, daß** das Dämpfungselement (300) parallel zum Motorelement (200) angeordnet ist.

21. Vorrichtung nach einem der Ansprüche 19 oder 20, **dadurch gekennzeichnet, daß** das Dämpfungselement (300) in das Motorelement (200) integriert ist.

22. Vorrichtung nach Anspruch 21, **dadurch gekennzeichnet, daß** das Motorelement (200) in der Kolbenstange (324) eines Dämpfungszylinders angeordnet ist.

23. Vorrichtung nach einem der Ansprüche 19 bis 22, **dadurch gekennzeichnet, daß** Mittel vorgesehen sind, die dafür geeignet sind, das Dämpfungselement beim Einsatz des Motorelements (100) auszukuppeln.

24. Vorrichtung nach Anspruch 23, **dadurch gekennzeichnet, daß** die Kolbenstange des Dämpfungszylinders (300) eine Schwächungslinie hat, die beim Einsatz des Motorelements (100) auftrennbar ist.
